# EUROPEAN PATENT SPECIFICATION

(11) **EP 2 192 518 B1**
(45) Date of publication and mention of the grant of the patent: **27.01.2016**
(21) Application number: 09013966.8
(22) Date of filing: 06.11.2009
(51) Int. Cl.: G06F 21/72

(54) **System for securing multithreaded server applications**
System zur Sicherung von multi-threaded Serveranwendungen
Système pour sécuriser des applications multifiles de serveur

(30) Priority: 19.11.2008 US 274130
(43) Date of publication of application: 02.06.2010
(73) Proprietor: Accenture Global Services Limited, Dublin 4 (IE)
(72) Inventor: Grechanik, Mark, Chicago, Illinois 60657 (US); Xie, Qing, Chicago, Illinois 60610 (US); Fu, Chen, Lisle, Illinois 60532 (US)
(74) Representative: Müller-Boré & Partner Patentanwälte PartG mbB

(56) References cited:
- EP-A2- 1 821 201
- US-A1- 2007 294 696
- COOK D L ET AL: "Cryptographics: secret key cryptography using graphics cards" LECTURE NOTES IN COMPUTER SCIENCE, SPRINGER VERLAG, DE, vol. 3376, 1 January 2005 (2005-01-01), pages 334-350, XP002478385 ISSN: 0302-9743

## Description

### BACKGROUND OF THE INVENTION

### 1. Priority Claim.

This application claims the benefit of U.S. Application No. 12/274,130, filed November 19, 2008 assigned attorney docket number 10022/1389 which is incorporated herein by reference in its entirety.

### 2. Technical Field.

This disclosure relates to a data processing system in which computations are efficiently offloaded from a system central processing unit (CPU) to a system graphics processing unit (GPU).

### 3. Related Art.

Performance is a key challenge in building large-scale applications because predicting the behavior of such applications is inherently difficult. Weaving security solutions into the fabric of the architectures of these applications almost always worsens the performance of the resulting systems. The performance degradation can be more than 90% when all applications data is protected, and may be even worse when other security mechanisms are applied.

In order to be effective, cryptographic algorithms are necessarily computationally intensive and must be integral parts of data protection protocols. The cost of using cryptographic algorithms is significant since their execution consumes many CPU cycles which affects the performance of applications negatively. For example, cryptographic operations in the Secure Socket Layer (SSL) protocol slow downloading files from servers from about 10 to about 100 times. The SSL operations also penalize performance for web servers anywhere from a factor of about 3.4 to as much as a factor of nine. Generally, whenever a data message crosses a security boundary, the message is encrypted and later decrypted. These operations give rise to the performance penalty.

One prior attempt at alleviating the cost of using cryptographic protocols included adding separate specialized hardware to provide support for security. The extra dedicated hardware allowed applications to use more CPU cycles. However, dedicated hardware is expensive and using it requires extensive changes to the existing systems. In addition, using external-hardware devices for cryptographic functions adds marshalling and unmarshalling overhead (caused by packaging and unpackaging data) as well as device latency.

Another prior attempt at alleviating the cost of using cryptographic protocols was to add CPUs to handle cryptographic operations. However, the additional CPUs are better utilized for the core computational logic of applications in order to improve their response times and availability. In addition, most computers have limitations on the number of CPUs that can be installed on their motherboards. Furthermore, CPUs tend to be expensive resources that are designed for general-purpose computations rather than specific application to cryptographic computations. This may result in underutilization of the CPUs and an unfavorable cost-benefit outcome.

Therefore, a need exists to address the problems noted above and others previously experienced.

EP 1821201 A2 relates to a graphics processing unit is programmed to carry out cryptographic processing so that fast, effective cryptographic processing solutions can be provided without incurring additional hardware costs. The graphics processing unit can efficiently carry out cryptographic processing because it has an architecture that is configured to handle a large number of parallel processes. The cryptographic processing carried out on the graphics processing unit can be further improved by configuring the graphics processing unit to be capable of both floating point and integer operations.

US 2007/0294696 A1 relates to a runtime system implemented in accordance with the present invention provides an application platform for parallel-processing computer systems. Such a runtime system enables users to leverage the computational power of parallel-processing computer systems to accelerate/optimize numeric and array-intensive computations in their application programs. This enables greatly increased performance of high-performance computing (HPC) applications.

The research paper "CryptoGraphics: Secret Key Cryptography Using Graphics Cards" from Cook D. L. et al. relates to the feasibility of using Graphics Processing Units (GPUs) for cryptographic processing, by exploiting the ability for GPUs to simultaneously process large quantities of pixels, to offload symmetric key encryption from the main processor. The paper demonstrates the use of GPUs for applying the key stream when using stream ciphers. The paper also investigates the use of GPUs for block ciphers, discusses operations that make certain ciphers unsuitable for use with a GPU, and compares the performance of an OpenGL-based implementation of AES with implementations utilising general CPUs.

Thus, according to an aspect, it is a problem to optimise supervisory control of encryption and decryption messages in a multithreaded environment providing multithreaded off-loading of source message components for encryption and decryption to a graphics processing unit (GPU).

This problem is solved by a machine according to claim 1, a machine according to claim 6, an article of manufacture of claim 10, and an article of manufacture of claim 15, having the features disclosed in the corresponding claims. Preferred embodiments are defined in the dependent claims.

Thus, a system for securing multithreaded server applications improves the availability of a CPU for executing core applications. The system improves the performance of multithreaded server applications by providing offloading, batching, and scheduling mechanisms for efficiently executing processing tasks needed by the applications on a GPU. As a result, the system helps to reduce the overhead associated with cooperative processing between the CPU and the GPU, with the result that the CPU may instead spend more cycles executing the application logic.

Other systems, methods, features and advantages will be, or will become, apparent to one with skill in the art upon examination of the following figures and detailed description. It is intended that all such additional systems, methods, features and advantages be included within this description, be within the scope of the invention, and be protected by the following claims.

### BRIEF DESCRIPTION OF THE DRAWINGS

The system may be better understood with reference to the following drawings and description. The components in the figures are not necessarily to scale, emphasis instead being placed upon illustrating the principles of the invention. Moreover, in the figures, like referenced numerals designate corresponding parts throughout the different views.
Figure 1 shows a system for supervisory control of encryption and decryption operations in a multithreaded application execution environment in which messages are batched for submission to a GPU.
Figure 2 shows a system for supervisory control of encryption and decryption operations in a multithreaded application execution environment in which processed message components from a processed message received from a GPU are delivered to threads of an application.
Figure 3 shows a flow diagram of the processing that encryption supervisory logic may implement to batch messages for submission to a GPU.
Figure 4 shows a flow diagram of the processing that encryption supervisory logic may implement to return messages processed by a GPU to threads of an application.
Figure 5 shows a flow diagram of the processing that encryption supervisory tuning logic may implement.
Figure 6 shows experimental results of the batching mechanism implemented by the encryption supervisory logic in the system.
Figure 7 shows an example of simulation results of mean waiting time against maximum composite message capacity.

### DETAILED DESCRIPTION

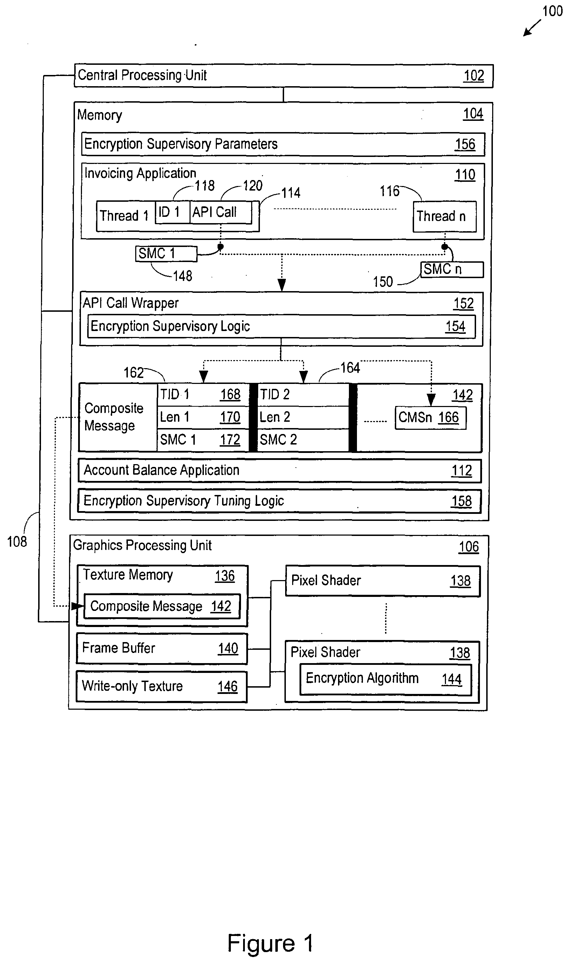

Figure 1 shows a system 100 for supervisory control of encryption and decryption operations in a multithreaded application execution environment. The system 100 includes a central processing unit (CPU) 102, a memory 104, and a graphics processing unit (GPU) 106. The GPU 106 may be a graphics processor available from NVIDIA of Santa Clara, CA or ATI Research, Inc. of Marlborough, MA, as examples. The GPU 106 may communicate with the CPU 102 and memory 104 over a bus 108, such as the peripheral component interconnect (PCI) bus, the PCI Express bus, Accelerated Graphics Port (AGP) bus, Industry Standard Architecture (ISA) bus, or other bus. As will be described in more detail below, the CPU 102 executes applications from the system memory 104. The applications may be multi-threaded applications.

One distinction between the CPU 102 and the GPU 106 is that the CPU 102 typically follows a Single Instruction Single Data (SISD) model and the GPU 106 typically follows a Single Instruction Multiple Data (SIMD) stream model. Under the SISD model, the CPU 102 executes one (or at most a few) instructions at a time on a single (or at most a few) data elements loaded into the memory prior to executing the instruction. In contrast, a SIMD processor includes many processing units (e.g., 16 to 32 pixel shaders) that simultaneously execute instructions from a single instruction stream on multiple data streams, one per processing unit. In other words, one distinguishing feature of the GPU 106 over the CPU 102 is that the GPU 106 implements a higher level of processing parallelism than the CPU. The GPU 106 also includes special memory sections, such as texture memory, frame buffers, and write-only texture memory used in the processing of graphics operations.

The memory holds applications executed by the CPU 102, such as the invoicing application 110 and the account balance application 112. Each application may launch multiple threads of execution. As shown in Figure 1, the invoicing application has launched threads 1 through 'n', labeled 114 through 116. Each thread may handle any desired piece of program logic for the invoicing application 110.

Each thread, such as the thread 114, is associated with a thread identifier (ID) 118. The thread ID may be assigned by the operating system when the thread is launched, by other supervisory mechanisms in place on the system 100, or in other manners. The thread ID may uniquely specify the thread so that it may be distinguished from other threads executing in the system 100.

The threads perform the processing for which they were designed. The processing may include application programming interface (API) calls 120 to support the processing. For example, the API calls 120 may implement encryption services (e.g., encryption or decryption) on a message passed to the API call by the thread. However, while the discussion below proceeds with reference to encryption services, the API calls may request any other processing logic (e.g., authentication or authorization, compression, transcoding, or other logic) and are not limited to encryption services. Similarly, the supervisory logic 154 may in general handle offloading, scheduling, and batching for any desired processing, and is not limited to encryption services.

The GPU 106 includes a read-only texture memory 136, multiple parallel pixel shaders 138, and a frame buffer 140. The texture memory 136 stores a composite message 142, described in more detail below. Multiple parallel pixel shaders 138 process the composite message 142 in response to execution calls (e.g., GPU draw calls) from the CPU 102. The multiple parallel pixel shaders 138 execute an encryption algorithm 144 that may provide encryption or decryption functionality applied to the composite message 142, as explained in more detail below. The GPU 106 also includes a write-only texture memory 146. The GPU 106 may write processing results to the write-only texture memory 146 for retrieval by the CPU 102. The CPU 102 returns results obtained by the GPU 106 to the individual threads that gave rise to components of the composite message 142. Other data exchange mechanisms may be employed to exchange data with the GPU rather than or in addition to the texture memory 136 and the write-only texture memory 146.

The programming functionality of the pixel shaders 138 may follow that expected by the API call 120. The pixel shaders 138 may highly parallelize the functionality. However, as noted above, the pixel shaders 138 are not limited to implementing encryption services.

Each thread, when it makes the API call 120, may provide a source message component upon which the API call is expected to act. Figure 1 shows a source message component 148 provided by thread 114, and a source message component 'n' provided by thread 'n' 116, where 'n' is an integer. For example, the source message component may be customer invoice data to be encrypted before being sent to another system. Thus, the system 100 may be used in connection with a defense-in-depth strategy through which, for example, messages are encrypted and decrypted at each communication boundary between programs and/or systems.

The system 100 intercepts the API calls 120 to provide more efficient processing of the potentially many API calls made by the potentially many threads of execution for an application. To that end, the system 100 may implement an API call wrapper 152 in the memory. The API call wrapper 152 receives the API call, and substitutes the encryption supervisory logic 154 for the usual API call logic. In other words, rather than the API call 120 resulting in a normal call to the API call logic, the system 100 is configured to intercept the API call 120 through the API call wrapper 152 and substitute different functionality.

Continuing the example regarding encryption services, the API call wrapper 152 substitutes encryption supervisory logic 154 for the normal API call logic. The memory 104 may also store encryption supervisory parameters 156 that govern the operation of the encryption supervisory logic 154. Furthermore, as discussed below, the system 100 may also execute encryption supervisory tuning logic 158 to adjust or optimize the encryption supervisory parameters 156.

To support encryption and decryption of source message components that the threads provide, the encryption supervisory logic 154 may batch requests into a composite message 142. Thus, for example, the encryption supervisory logic 154 may maintain a composite message that collects source message components from threads requesting encryption, and a composite message that collects source message components from threads requesting decryption. Separate encryption supervisory parameters may govern the batching of source message components into any number of composite messages. After receiving each source message component, the encryption supervisory logic 154 may put each thread to sleep by calling an operating system function to sleep a thread according to a thread ID specified by the encryption supervisory logic 154. One benefit of sleeping each thread is that other active threads may use the CPU cycles freed because the CPU is no longer executing the thread that is put to sleep. Accordingly, the CPU stays busy executing application logic.

In the example shown in Figure 1, the composite message 142 holds source message components from threads that have requested encryption of particular messages. More specifically, the encryption supervisory logic 154 obtains the source message components 148, 150 from the threads 114, 116 and creates a composite message section based on each source message component 148, 150. In one implementation, the encryption supervisory logic 154 creates the composite message section as a three field frame that includes a thread ID, a message length for the source message component (or the composite message section that includes the source message component), and the source message component. The encryption supervisory logic 154 then batches each composite message section into the composite message 142 (within the limits noted below) by adding each composite message section to the composite message 142.

Figure 1 shows that the composite message 142 includes 'n' composite message sections labeled 162, 164, 166. Each composite message section includes a thread ID, message length, and a source message component. For example, the composite message section 162 includes a thread ID 168 (which may correspond to the thread ID 118), message length 170, and a source message component 172 (which may correspond to the source message component 148).

The CPU 102 submits the composite message 142 to the GPU 106 for processing. In that regard, the CPU 102 may write the composite message 142 to the texture memory 136. The CPU 102 may also initiate GPU 106 processing of the composite message by issuing, for example, a draw call to the GPU 106.

The batching mechanism implemented by the system 100 may significantly improve processing performance. One reason is that the system 100 reduces the data transfer overhead of sending multiple small messages to the GPU 106 and retrieving multiple small processed results from the GPU 106. The system 100 helps improve efficiency by batching composite message components into the larger composite message 142 and reading back a larger processed message from the write-only texture 146. More efficient data transfer to and from the GPU 106 results. Another reason for the improvement is that fewer draw calls are made to the GPU 106. The draw call time and resource overhead is therefore significantly reduced.

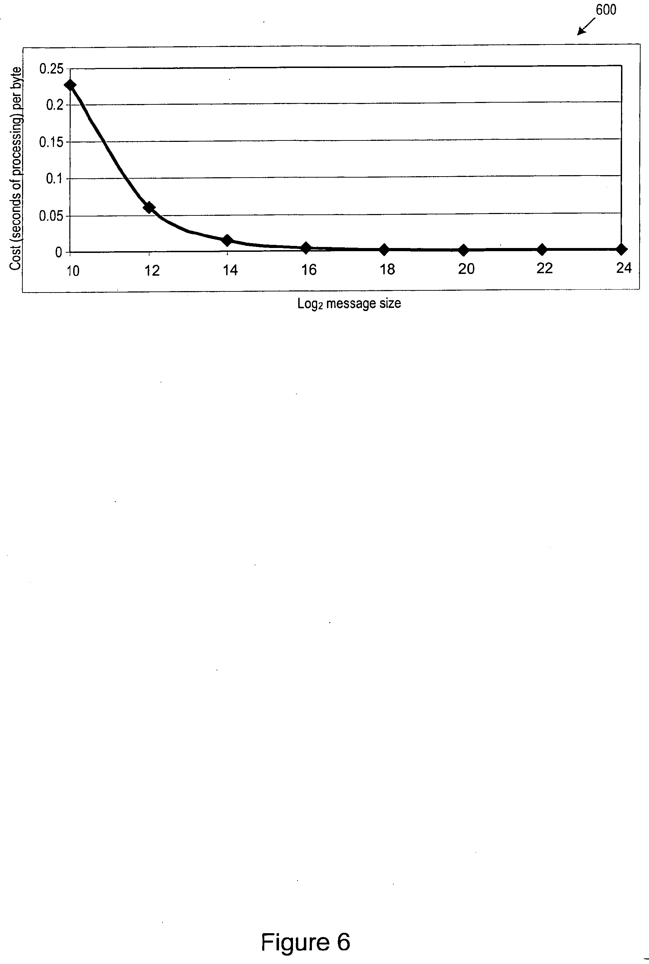

Turning briefly to Figure 6, experimental results 600 of the batching mechanism implemented by the encryption supervisory logic 154 are shown. The experimental results 600 show a marked decrease in the cost of processing per byte as the composite message size increases. Table 1 provides the experimental data points. For example, at a log base 2 message size of 16, a 57 times increase in efficiency is obtained over a log base 2 message size of 10.

| Table 1 - Experimental Results | | |
|---|---|---|
| Composite Message Size | Log₂ Composite Message Size | Cost per byte in seconds of processing time |
| 1024 | 10 | 0.228515625 |
| 4096 | 12 | 0.061035156 |
| 16384 | 14 | 0.015258789 |
| 65536 | 16 | 0.004043579 |
| 262144 | 18 | 0.00107193 |
| 1048576 | 20 | 0.00035762 |
| 4194304 | 22 | 0.000186205 |
| 16777216 | 24 | 0.000137866 |

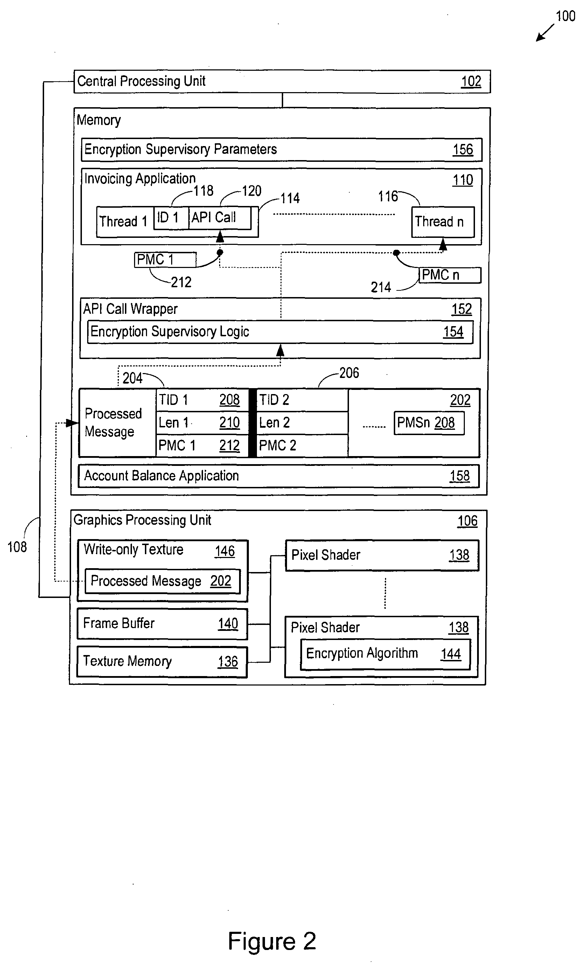

Figure 2 highlights how the encryption supervisory logic 154 handles a processed message 202 returned from the GPU 106. In one implementation, the GPU 106 completes the requested processing on the composite message 142 and writes a resulting processed message 202 into the write-only texture memory 146. The GPU 106 notifies the CPU 102 that processing is complete on the composite message 142. In response, the CPU 102 reads the processed message 202 from the write-only texture memory 146.

As shown in Figure 2, the processed message 202 includes multiple processed message sections, labeled 204, 206, and 208. The processed message sections generally arise from processing of the composite message sections in the composite message 142. However, there need not be a one-to-one correspondence between what is sent for processing in the composite message 142 and what the GPU 106 returns in the processed message 202.

A processed message section may include multiple fields. For example, the processed message section 204 includes a thread ID 208, message length 210, and a processed message component 212. The message length 210 may represent the length of the processed message component (or the processed message section that includes the processed message component). The thread ID 208 may designate the thread to which the processed message component should be delivered.

The encryption supervisory logic 154 disassembles the processed message 202 into the processed message sections 204, 206, 208 including the processed message components. The encryption supervisory logic 154 also selectively communicates the processed message components to chosen threads among the multiple execution threads of an application, according to which of the threads originated source message components giving rise to the processed message components. In other words, a thread which submits a message for encryption receives in return an encrypted message. The GPU 106 produces the encrypted message and the CPU 102 returns the encrypted message to the thread according to the thread ID specified in the processed message section accompanying the encrypted processed message component. The thread ID 208 specified in the processed message section generally tracks the thread ID 168 specified in the composite message section that gives rise to the processed message section.

In the example shown in Figure 2, the encryption supervisory logic 154 returns the processed message component 212 to thread 1 of the invoicing application 110. The encryption supervisory logic 154 also returns the other processed message components, including the processed message component 214 from processed message section 'n' 208 to the thread 'n' 116. Prior to returning each processed message component, the encryption supervisory logic 154 may wake each thread by calling an operating system function to wake a thread by thread ID.

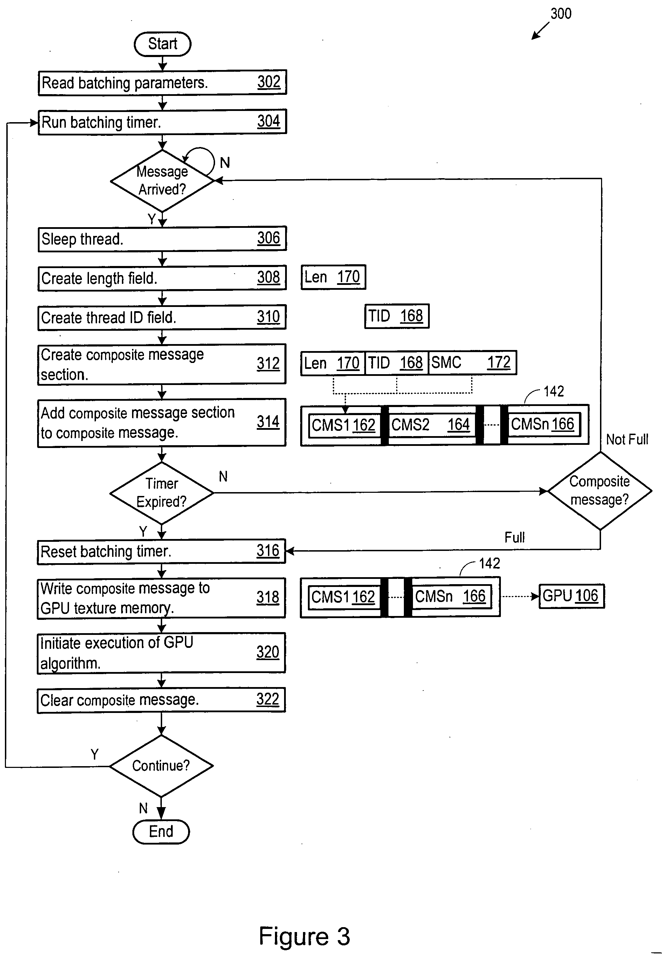

Figure 3 shows a flow diagram of the processing that encryption supervisory logic 154 may implement to submit composite messages 142 to the GPU 106. The encryption supervisory logic 154 reads the encryption supervisory parameters 156, including batching parameters (302). The batching parameters may include the maximum or minimum length of a composite message 142, and the maximum or minimum wait time for new source message components (e.g., a batching timer) before sending the composite message 142. The batching parameters may also include the maximum or minimum number of composite message sections permitted in a composite message 142, the maximum or minimum number of different threads from which to accept source message components, or other parameters which influence the processing noted above.

The encryption supervisory logic 154 starts a batching timer based on the maximum wait time (if any) for new source message components (304). When a source message component arrives, the encryption supervisory logic 154 sleeps the thread that submitted the source message component (306). The encryption supervisory logic 154 then creates a composite message section to add to the current composite message 142. To that end, the encryption supervisory logic 154 may create a length field (308) and a thread ID field (310) which are added to the source message component to obtain a composite message section (312). The encryption supervisory logic 154 adds the composite message section to the composite message (314).

If the batching timer has not expired, the encryption supervisory logic 154 continues to obtain source message components as long as the composite message 142 has not reached its maximum size. However, if the batching timer has expired, or if the maximum composite message size is reached, the encryption supervisory logic 154 resets the batching timer (316) and writes the composite message to the GPU 106 (318). Another limit on the batch size in the composite message 142 may be set by the maximum processing capacity of the GPU. For example, if the GPU has a maximum capacity of K units (e.g., where K is the number of pixel shaders or other processing units or capacity on the GPU), then the system 100 may set the maximum composite message size to include no more than K composite message sections.

Accordingly, no thread is forced to wait more than a maximum amount of time specified by the batching timer until the source message component submitted by the thread is sent to the GPU 106 for processing. A suitable value for the batching timer may depend upon the particular system implementation, and may be chosen according to a statistical analysis described below, at random, according to pre-selected default values, or in many other ways. Once the composite message 142 is written to the GPU 106, the encryption supervisory logic 154 initiates execution of the GPU 106 algorithm on the composite message 142 (320). One mechanism for initiating execution is to issue a draw call to the GPU 106. The encryption supervisory logic 154 clears the composite message 142 in preparation for assembling and submitting the next composite message to the GPU 106.

It is the responsibility of the algorithm implementation on the GPU 106 to respect the individual thread IDs, message lengths, and source message components that give structure to the composite message 142. Thus, for example, the encryption algorithm 144 is responsible for executing fragments on the processors in the GPU for separating the composite message sections, processing the source message components, and creating processed message component results that are tagged with the same thread identifier as originally provided with the composite message sections. In other words, the algorithm implementation recognizes that the composite message 142 is not necessarily one single message to be processed, but a composition of smaller composite message sections to be processed in parallel on the GPU, with the processed results written to the processed message 202.

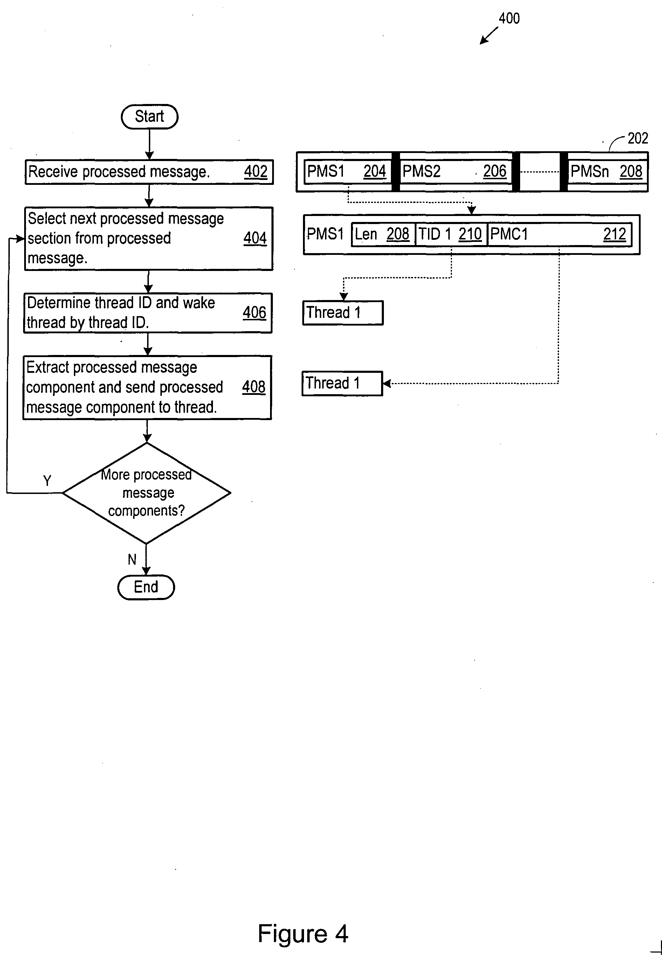

Figure 4 shows a flow diagram of the processing that encryption supervisory logic 154 may implement to return processed message components to application threads. The encryption supervisory logic 154 reads the processed message 202 (e.g., from the write-only texture 146 of the GPU 106) (402). The encryption supervisory logic 154 selects the next processed message section from the processed message 202 (404). As noted above, the encryption supervisory logic 154 wakes the thread identified by the thread ID in the processed message section (406). Once the thread is awake, the encryption supervisory logic 154 sends the processed message component in the processed message section to the thread (408). The thread then continues processing normally. The encryption supervisory logic 154 may disassemble the processed message 202 into as many processed message sections as exist in the processed message 202.

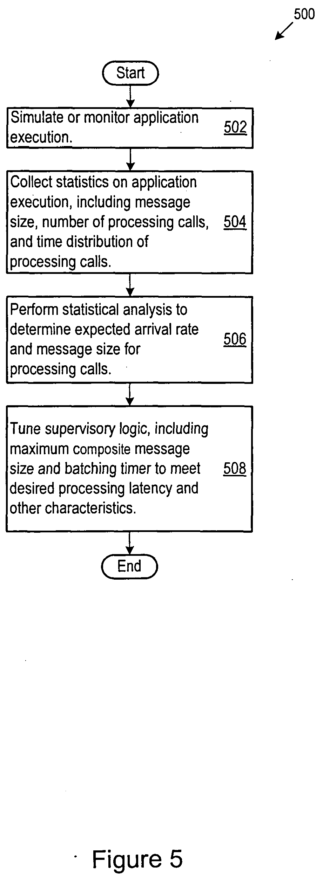

Figure 5 shows a flow diagram of the processing that encryption supervisory tuning logic 158 ("tuning logic 158") may implement. The tuning logic 158 may simulate or monitor execution of applications running in the system 100 (502). As the applications execute, the tuning logic 158 gathers statistics on application execution, including message size, number of API processing calls, time distribution of processing calls, and any other desired execution statistics (504). The statistical analysis may proceed using tools for queue analysis and batch service to determine expected message arrival rates, message sizes, mean queue length, mean waiting time or long-term average number of waiting processes (e.g., using the Little Law that the long-term average number of customers in a stable system N, is equal to the long-term average arrival rate, λ, multiplied by the long-term average time a customer spends in the system, T) and other parameters (506).

Given the expected arrival rate, message sizes, and other statistics for processing calls, the tuning logic 158 may set the batching timer, maximum composite message size, maximum composite message sections in a composite message, and other encryption supervisory parameters 156 to achieve any desired processing responsiveness by the system 100. In other words, the encryption supervisory parameters 156 may be tuned to ensure that an application does not wait longer, on average, than an expected time for a processed result.

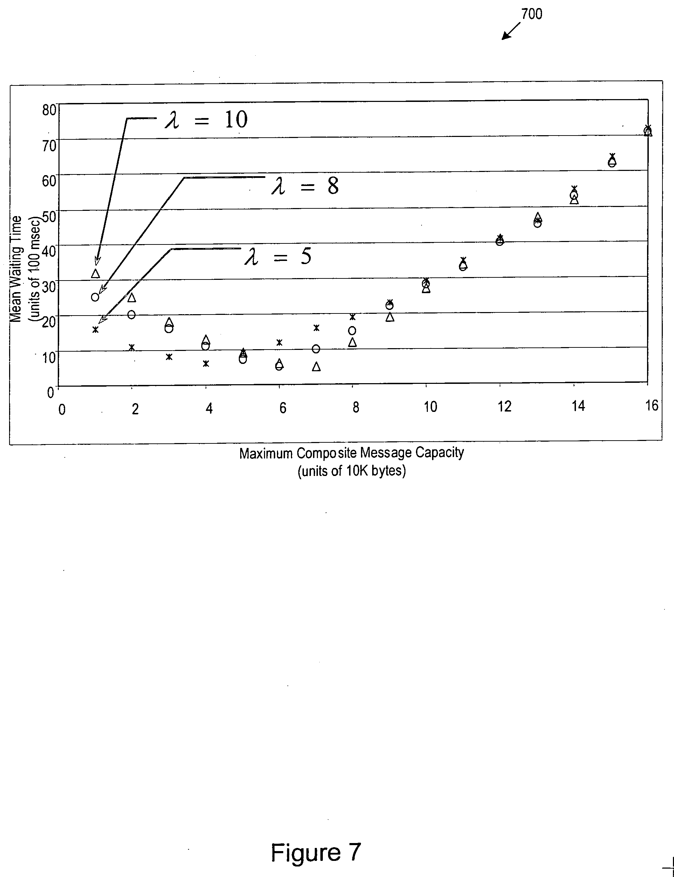

Figure 7 shows an example of simulation results 700 of mean waiting time against maximum composite message capacity. Using such statistical analysis results, the tuning logic 158 may set the maximum composite message length to minimize mean waiting time, or obtain a mean waiting time result that balances mean waiting time against other considerations, such as cost of processing per byte as shown in Figure 6.

The system described above optimizes encryption for large-scale multithreaded applications, where each thread executes any desired processing logic. The system implements encryption supervisory logic that collects source message components from different threads that execute on the CPU, batches the source message components into a composite message in composite message sections. The system then sends the composite message to the GPU. The GPU locally executes any desired processing algorithm, such as encryption algorithm that encrypts or decrypts the source message components in the composite message sections on the GPU.

The GPU returns a processed message to the CPU. The encryption supervisory logic then disassembles the processed message into processed message sections, and passes the processed message components within each processed message section back the correct threads of execution (e.g., the threads that originated the source message components). The system thereby significantly reduces the overhead that would be associated with passing and processing many small messages between the CPU and the (GPU. The system 100 is not only cost effective, but can also reduce the performance overhead of cryptographic algorithms to 12% or less with a response time less than 200 msec, which is significantly smaller than other prior attempts to provide encryption services.

The logic described above may be implemented in any combination of hardware and software. For example, programs provided in software libraries may provide the functionality that collects the source messages, batches the source messages into a composite message, sends the composite message to the GPU, receives the processed message, disassembles the processed message into processed message components, and that distributes the processed message components to their destination threads. Such software libraries may include dynamic link libraries (DLLs), or other application programming interfaces (APIs). The logic described above may be stored on a computer readable medium, such as a CDROM, hard drive, floppy disk, flash memory, or other computer readable medium. The logic may also be encoded in a signal that bears the logic as the signal propagates from a source to a destination.

Furthermore, it is noted that the system carries out electronic transformation of data that may represent underlying physical objects. For example, the collection and batching logic transforms, by selectively controlled aggregation, the discrete source messages into composite messages. The disassembly and distribution logic transforms the processed composite messages by selectively controlled separation of the processed composite messages. These messages may represent a wide variety of physical objects, including as examples only, images, video, financial statements (e.g., credit card, bank account, and mortgage statements), email messages, or any other physical object.

In addition, the system may be implemented as a particular machine. For example, the particular machine may include a CPU, GPU, and software library for carrying out the encryption (or other API call processing) supervisory logic noted above. Thus, the particular machine may include a CPU, a GPU, and a memory that stores the encryption supervisory logic described above. Adding the encryption supervisory logic may include building function calls into applications from a software library that handle the collection, batching, sending, reception, disassembly, and distribution logic noted above or providing an API call wrapper and program logic to handle the processing noted above. However, the applications or execution environment of the applications may be extended in other ways to cause the interaction with the encryption supervisory logic.

According to an aspect, a machine for supervisory control of encryption and decryption operations in a multithreaded environment is provided. The machine comprises a central processing unit (CPU), a graphics processing unit (GPU) including a texture memory and multiple processing units that execute an encryption algorithm a memory coupled to the CPU. The memory comprises an application comprising multiple execution threads, source message components generated by the multiple execution threads of the application, and encryption supervisory logic. The encryption supervisory logic is operable to batch the source message components into a composite message, and communicate the composite message to the GPU for processing by the encryption algorithm.

In some embodiments, the encryption supervisory logic is operable to communicate the composite message by writing the composite message to the texture memory of the GPU.

The encryption supervisory logic may be further operable to construct composite message sections by adding a thread identifier and a message length to each source message component.

It may be that the encryption supervisory logic is operable to batch the source message components by adding each of the composite message sections into the composite message.

In some embodiments, the encryption supervisory logic is further operable to batch the source message components into the composite message until a maximum composite message size is reached.

Accordingly, the encryption supervisory logic may be further operable to batch the source message components into the composite message until a batching timer expires, and then communicate the composite message to the GPU.

In some cases, the memory further comprises an API call wrapper that intercepts message encryption function calls by the multiple execution threads and redirects the message encryption function calls to the encryption supervisory logic.

According to another aspect, a machine for supervisory control of encryption and decryption operations in a multithreaded environment is provided. The machine comprises a central processing unit (CPU) and a graphics processing unit (GPU). The GPU comprises a write-only texture memory and multiple processing units that execute an encryption algorithm. The machine also comprises a memory coupled to the CPU. The memory includes a first application comprising multiple execution threads, and encryption supervisory logic. The encryption supervisory logic is operable to receive a processed message from the GPU which has been processed by the encryption algorithm, disassemble the processed message into processed message sections including processed message components, and selectively communicate the processed message components to chosen threads among multiple execution threads of an application, according to which of the threads originated source message components giving rise the processed message components.

In some embodiments, the encryption supervisory logic is operable to receive the processed message by reading the processed message from the write-only texture memory of the GPU.

Accordingly, the encryption supervisory logic may be further operable to disassemble the processed message into processed message sections including thread identifiers and processed message components, and communicate the processed message components to the multiple execution threads as identified by the thread identifiers.

Also, it may be that the encryption supervisory logic is further operable to initiate a wake command to each thread to which a processed message component is communicated.

According to a yet another aspect, an article of manufacture comprising a computer readable memory, and encryption supervisory logic stored in the memory is provided. The encryption supervisory logic is operable to obtain source message components from multiple execution threads of an application, batch the source message components into a composite message, and communicate the composite message to a graphics processing unit (GPU) for processing by an encryption algorithm executing on the GPU.

In some embodiments, the encryption supervisory logic is operable to communicate the composite message by writing the composite message to a texture memory of the GPU.

Also, the encryption supervisory logic may be further operable to construct composite message sections by adding a thread identifier and a message length to each source message component.

It may be that the encryption supervisory logic is operable to batch the source message components by adding each of the composite message sections into the composite message.

In some cases, the encryption supervisory logic is further operable to batch the source message components into the composite message until a maximum composite message size is reached.

Accordingly, the encryption supervisory logic may be further operable to batch the source message components into the composite message until a batching timer expires, and then communicate the composite message to the GPU.

Furthermore, the encryption supervisory logic may be responsive to an API call wrapper that intercepts message encryption function calls by the multiple execution threads and redirects the message encryption function calls to the encryption supervisory logic.

According to a further aspect, an article of manufacture comprising a computer readable memory, and encryption supervisory logic stored in the memory is provided. The encryption supervisory logic is operable to receive a processed message from a graphics processing unit (GPU) which has been processed by an encryption algorithm executed on the GPU, and disassemble the processed message into processed message sections including processed message components. The encryption supervisory logic is further operable to selectively communicate the processed message components to chosen threads among multiple execution threads of an application, according to which of the threads originated source message components giving rise the processed message components.

In some embodiments, the encryption supervisory logic is operable to receive the processed message by reading the processed message from a write-only texture memory of the GPU.

Also, it may be that the encryption supervisory logic is further operable to disassemble the processed message into processed message sections including thread identifiers and processed message components, and communicate the processed message components to the multiple execution threads as identified by the thread identifiers.

Moreover, the encryption supervisory logic may be further operable to initiate a wake command to each thread to which a processed message component is communicated.

## Claims

1. A machine (100) for supervisory control of encryption and decryption operations in a multithreaded environment, the machine (100) comprising:
a central processing unit (CPU 102);
a graphics processing unit (GPU 106) comprising a texture memory (146) and multiple processing units that execute an encryption algorithm (144); and
a memory (104) coupled to the CPU (102), the memory (104) comprising:
an application (110) comprising multiple execution threads (114, 116);
source message components (148, 150) generated by the multiple execution threads (114, 116) of the application (110); and
encryption supervisory logic (154) operable to:
- obtain the source message components (148, 150) from the multiple execution threads (114, 116) requesting encryption and decryption;
- batch the source message components (148, 150) from different threads of the multiple execution threads (114, 116) into a composite message (142) until a batching timer expires, wherein batching the source message components (148, 116) into the composite message (142) comprises:
-- creating, for each of the obtained source message components (148, 150), a composite message section, the composite message section including a thread identifier (208) of the respective execution thread (114, 116), a message length for the source message component (148, 150), and the source message component, respectively; and
-- batching the created composite message section into the composite message section;
- after receiving each source message component (148, 150), put each thread (114, 116) to sleep by calling an operation system function to sleep a thread (114, 116) according to a thread identifier (208) specified by the encryption supervisory logic (154); and
- communicate the composite message (142) to the GPU (106) for processing by the encryption algorithm (144), wherein processing by the encryption algorithm (144) comprises:
-- separating the composite message sections in the composite message;
-- processing each source message component (148, 116) of each composite message section, wherein processing a source message component comprises encrypting or decrypting the source message component;
-- generating, for each processed source message component, a processed message component (212, 214) comprising the thread identifier (208) of the respective source message component (148, 116); and
-- generating a processed message (202) comprising all generated processed message components (212, 214);
- receive (402) the processed message (202) from the GPU (106);
- disassemble (404) the processed message (202) into processed message sections (204, 206, 208), including the thread identifiers (208) and the processed message components (212, 214); and
communicate the processed message components (212, 214) to the multiple execution threads (114, 116) as identified by the thread identifiers (208);
- initiate a wake command to each thread to which a processed message component (212, 214) is communicated; and
- selectively communicate (408) the processed message components (212, 214) to chosen threads among multiple execution threads (114, 116) of the application (110), according to which of the threads originated source message components (148, 150) giving rise the processed message components (212, 214).

2. The machine (100) according to claim 1, where the encryption supervisory logic (154) is operable to:
communicate the composite message (142) by writing the composite message (142) to the texture memory (146) of the GPU (106).

3. The machine (100) according to any one of the preceding claims, where the encryption supervisory logic (154) is further operable to:
batch the source message components (148, 150) into the composite message (142) until a maximum composite message size is reached and then communicate the composite message (142) to the GPU (106).

4. The machine (100) according to any one of the preceding claims, where the encryption supervisory logic (154) is further operable to batch source message components (148, 150) into the composite message (142) such that the composite message includes not more than a maximum number of composite message sections, the maximum number of composite message sections determined based on maximum processing capacity of the GPU.

5. The machine (100) according to any one of the preceding claims, where the memory (104) further comprises:
an API call wrapper (152) that intercepts message encryption function calls by the multiple execution threads (114, 116) and redirects the message encryption function calls to the encryption supervisory logic (154).

6. The machine (100) according to any one of the preceding claims, where the encryption supervisory logic (154) is operable to receive the processed message (202) by reading the processed message (202) from the write-only texture memory (146) of the GPU (106).

7. An article of manufacture (100), comprising:
a computer readable memory (104); and
encryption supervisory logic (154) stored in the memory (104) and operable to:
obtain source message components (148, 150) from multiple execution threads (114, 116) of an application (110) requesting encryption and decryption;
batch the source message components (148, 150) from different threads of the multiple execution threads (114, 116) into a composite message (142) until a batching timer expires, wherein batching the source message components (148, 116) into the composite message (142) comprises:
-- creating, for each of the obtained source message components (148, 150), a composite message section, the composite message section including a thread identifier (208) of the respective execution thread (114, 116), a message length for the source message component (148, 150), and the source message component, respectively; and
-- batching the created composite message section into the composite message section;
after receiving each source message component (148, 150), put each thread (114, 116) to sleep by calling an operation system function to sleep a thread (114, 116) according to a thread identifier (208) specified by the encryption supervisory logic (154); and
communicate the composite message (142) to a graphics processing unit (GPU 106) for processing by an encryption algorithm (144) executing on the GPU (106), wherein processing by the encryption algorithm (144) comprises:
- separating the composite message sections in the composite message;
- processing each source message component (148, 116) of each composite message section, wherein processing a source message component comprises encrypting or decrypting the source message component;
- generating, for each processed source message component, a processed message component (212, 214) comprising the thread identifier (208) of the respective source message component (148, 116); and
- generating a processed message (202) comprising all generated processed message components (212, 214);
receive (402) the processed message (202) from the GPU (106);
disassemble (404) the processed message (202) into processed message sections (204, 206, 208) including the thread identifiers (208) and processed message components (212, 214); and
communicate the processed message components (212, 214) to the multiple execution threads (114, 116) as identified by the thread identifiers (208);
initiate a wake command to each thread to which a processed message component (212, 214) is communicated; and
selectively communicate (408) the processed message components (212, 214) to chosen threads among multiple execution threads (114, 116) of the application (110), according to which of the threads originated source message components (148, 150) giving rise the processed message components (212, 214).

8. The article of manufacture (100) of claim 7, where the encryption supervisory logic (154) is operable to:
communicate the composite message (142) by writing the composite message (142) to a texture memory (136) of the GPU (106).

9. The article of manufacture (100) of claim 7 or 8, where the encryption supervisory logic (154) is further operable to:
construct composite message sections (162, 164, 166) by adding a thread identifier (208) and a message length to each source message component (148, 150); and preferably, to batch the source message components (148, 150) by adding each of the composite message sections (162, 164, 166) into the composite message (142).

10. The article of manufacture (100) of any one of claims 7 to 9, where the encryption supervisory logic (154) is further operable to:
batch the source message components (148, 150) into the composite message (142) until a maximum composite message size is reached and then communicate the composite message (142) to the GPU (106).

11. The article of manufacture (100) of any one of claims 7 to 10, where the encryption supervisory logic (154) is responsive to an API call wrapper (152) that intercepts message encryption function calls by the multiple execution threads (114, 116) and redirects the message encryption function calls to the encryption supervisory logic (154).

## Patentansprüche

1. Eine Maschine (100) zur Überwachungssteuerung von Verschlüsselungs- und Entschlüsselungsvorgängen in einer *Multithread*-Umgebung, wobei die Maschine (100) Folgendes umfasst:
eine zentrale Verarbeitungseinheit (CPU 102);
eine Grafik-Verarbeitungseinheit (GPU 106), die einen Texturspeicher (146) und eine Vielzahl an Verarbeitungseinheiten umfasst, die einen Verschlüsselungs-Algorhytmus (144) ausführen; und
einen Speicher (104), der mit der CPU (102) gekoppelt ist, wobei der Speicher (104) Folgendes umfasst:
eine Anwendung (110) die eine Vielzahl an Ausführungs-Threads (114, 116) umfasst;
Quellennachrichten-Komponenten (148, 150), die von der Vielzahl an Ausführungs-Threads (114, 116) der Anwendung (110) erzeugt werden; und
Verschlüsselungs-Überwachungslogik (154), die zu Folgendem betriebsbereit ist:
- erhalten der Quellennachrichten-Komponenten (148, 150) von der Vielzahl an Ausführungs-Threads (114, 116), die eine Verschlüsselung und eine Entschlüsselung verlangen;
- stapeln der Quellennachrichten-Komponenten (148, 150) aus unterschiedlichen Threads aus der Vielzahl an Ausführungs-Threads (114, 116) als zusammengesetzte Nachricht (142), bis ein Stapelungs-Timer abgelaufen ist, wobei das Stapeln der Quellennachrichten-Komponenten (148, 116) als zusammengesetzte Nachricht (142) Folgendes umfasst:
-- erzeugen, für jede der erhaltenen Quellennachrichten-Komponenten (148, 150), eines Abschnitts der zusammengesetzten Nachricht, wobei der Abschnitt der zusammengesetzten Nachricht eine Thread-Kennung (208) des entsprechenden Ausführungs-Threads (114, 116), eine Nachrichten-Länge für die Quellennachrichten-Komponente (148, 150), und die Quellennachrichten-Komponente jeweils enthält; und
-- stapeln des erzeugten Abschnitts der zusammengesetzten Nachricht in den Abschnitt der zusammengesetzten Nachricht;
- nach dem Erhalt einer jeden Quellennachrichten-Komponente (148, 150), schlafen legen eines jeden Threads (114, 116) durch Aufrufen einer Betriebssystemfunktion, um den Thread (114, 116) entsprechend einer von einer Verschlüsselungs-Überwachungslogik (154) spezifizierten *Thread-*Kennung (208) schlafen zu legen; und
- übermitteln der zusammengesetzten Nachricht (142) an die GPU (106) zur Verarbeitung durch den Verschlüsselungs-Algorhytmus (144), wobei die Verarbeitung durch den Verschlüsselungs-Algorhytmus (144) Folgendes umfasst:
-- trennen der Abschnitte der zusammengesetzten Nachricht in der zusammengesetzten Nachricht;
-- verarbeiten von jeder Quellennachrichten-Komponente (148, 116) eines jeden Abschnitts der zusammengesetzten Nachricht, wobei das Verarbeiten einer Quellennachrichten-Komponente das Verschlüsseln oder Entschlüsseln der Quellennachrichten-Komponente beinhaltet;
-- generieren, für jede verarbeitete Quellennachrichten-Komponente, einer Komponente der verarbeiteten Nachricht (212, 214), die eine Thread-Kennung (208) der entsprechenden Quellennachrichten-Komponente (148, 116) umfasst; und
-- generieren einer verarbeiteten Nachricht (202), die alle generierten Komponenten der verarbeiteten Nachricht (212, 214) umfasst;
- empfangen (402) der verarbeiteten Nachricht (202) von der GPU (106);
- zerlegen (404) der verarbeiteten Nachricht (202) in Abschnitte (204, 206, 208) der verarbeiteten Nachricht, was die *Thread-*Kennung (208) und die Komponenten der verarbeiteten Nachricht (212, 214) beinhaltet; und übermitteln der Komponenten der verarbeiteten Nachricht (212, 214) an die mehreren Ausführungs-*Threads* (114, 116) wie durch die Thread-Kennung (208) ausgewiesen;
- auslösen eines Aufweck-Befehls (*wake command*) bei jedem *Thread,* an den eine Komponente der verarbeiteten Nachricht (212, 214) übermittelt worden ist; und
- selektiv übermitteln (408) der Komponenten der verarbeiteten Nachricht (212, 214) an ausgewählte *Threads* innerhalb der Vielzahl an Ausführungs-*Threads* (114, 116) der Anwendung (110), entsprechend welche der *Thread*-begründeten Quellennachrichten-Komponenten (148, 150) die Komponenten der verarbeiteten Nachricht (212, 214) hervorrufen.

2. Die Maschine (100) nach Anspruch 1, wobei die Verschlüsselungs-Überwachungslogik (154) zu Folgendem betriebsbereit ist:
übermitteln der zusammengesetzten Nachricht (142) durch Schreiben der zusammengesetzten Nachricht (142) in den Texturspeicher (146) der GPU (106).

3. Die Maschine (100) nach irgendeinem der vorhergehenden Ansprüche, wobei die Verschlüsselungs-Überwachungslogik (154) des Weiteren zu Folgendem betriebsbereit ist:
stapeln der Quellennachrichten-Komponenten (148, 150) in eine zusammengesetzte Nachricht (142), bis eine maximale Größe der zusammengesetzten Nachricht erreicht wird, und dann übermitteln der zusammengesetzten Nachricht (142) an die GPU (106).

4. Die Maschine (100) nach irgendeinem der vorhergehenden Ansprüche, wobei die Verschlüsselungs-Überwachungslogik (154) des Weiteren dazu betriebsbereit ist, Quellennachrichten-Komponenten (148, 150) als zusammengesetzte Nachricht (142) zu stapeln, sodass die zusammengesetzte Nachricht nicht mehr als eine maximale Anzahl an Abschnitten der zusammengesetzten Nachricht beinhaltet, wobei die maximale Anzahl an Abschnitten der zusammengesetzten Nachricht auf der Grundlage der maximalen Verarbeitungskapazität der GPU bestimmt wird.

5. Die Maschine (100) nach irgendeinem der vorhergehenden Ansprüche, wobei der Speicher (104) des Weiteren Folgendes umfasst:
einen API-Aufruf-*Wrapper* (152), der Funktionsaufrufe der mehreren Ausführungs-*Threads* (114, 116) zur Nachrichten-Verschlüsselung abfängt, und die Funktionsaufrufe zur Nachrichten-Verschlüsselung an die Verschlüsselungs-Überwachungslogik (154) weitersendet.

6. Die Maschine (100) nach irgendeinem der vorhergehenden Ansprüche, wobei die Verschlüsselungs-Überwachungslogik (154) dazu betriebsbereit ist, die verarbeitete Nachricht (202) zu empfangen, indem sie die verarbeitete Nachricht (202) aus dem lesegeschützten Texturspeicher (146) der GPU (106) liest.

7. Ein Herstellungsartikel (100), der Folgendes umfasst:
einen computerlesbarer Speicher (104); und
eine Verschlüsselungs-Überwachungslogik (154), die im Speicher (104) gespeichert ist und die zu Folgendem betriebsbereit ist:
erhalten von Quellennachrichten-Komponenten (148, 150) von der Vielzahl an Ausführungs-*Threads* (114, 116) einer Anwendung (110), die eine Verschlüsselung und eine Entschlüsselung verlangen;
stapeln der Quellennachrichten-Komponenten (148, 150) aus unterschiedlichen Threads aus der Vielzahl an Ausführungs-*Threads* (114, 116) als zusammengesetzte Nachricht (142) bis ein Stapelungs-Timer abgelaufen ist, wobei das Stapeln der Quellennachrichten-Komponenten (148, 116) als zusammengesetzte Nachricht (142) Folgendes umfasst:
-- erzeugen, für jede der erhaltenen Quellennachrichten-Komponenten (148, 150), eines Abschnitts der zusammengesetzten Nachricht, wobei der Abschnitt der zusammengesetzten Nachricht eine *Thread*-Kennung (208) des entsprechenden Ausführungs-Threads (114, 116), eine Nachrichten-Länge für die Quellennachrichten-Komponente (148, 150), und die Quellennachrichten-Komponente jeweils enthält; und
-- stapeln des erzeugten Abschnitts der zusammengesetzten Nachricht in den Abschnitt der zusammengesetzten Nachricht;
nach dem Erhalt einer jeden Quellennachrichten-Komponente (148, 150), schlafen legen eines jeden Threads (114, 116) durch Aufrufen einer Betriebssystemfunktion, um den Thread (114, 116) entsprechend einer von einer Verschlüsselungs-Überwachungslogik (154) spezifizierten Thread-Kennung (208) schlafen zu legen; und
übermitteln der zusammengesetzten Nachricht (142) an die Grafik-Verarbeitungseinheit (GPU 106), zur Verarbeitung durch einen Verschlüsselungs-Algorhytmus (144), der in der GPU (106) ausgeführt wird, wobei die Verarbeitung durch den Verschlüsselungs-Algorhytmus (144) Folgendes umfasst:
- trennen der Abschnitte der zusammengesetzten Nachricht in der zusammengesetzten Nachricht;
- verarbeiten von jeder Quellennachrichten-Komponente (148, 116) eines jeden Abschnitts der zusammengesetzten Nachricht, wobei das Verarbeiten einer Quellennachrichten-Komponente das Verschlüsseln oder Entschlüsseln der Quellennachrichten-Komponente beinhaltet;
- generieren, für jede verarbeitete Quellennachrichten-Komponente, einer Komponente der verarbeiteten Nachricht (212, 214), die die *Thread-*Kennung (208) der entsprechenden Quellennachrichten-Komponente (148, 116) umfasst; und
- generieren einer verarbeiteten Nachricht (202), die alle generierten Komponenten der verarbeiteten Nachricht (212, 214) umfasst;
empfangen (402) der verarbeiteten Nachricht (202) von der GPU (106);
zerlegen (404) der verarbeiteten Nachricht (202) in Abschnitte (204, 206, 208) der verarbeiteten Nachricht, was die Thread-Kennung (208) und die Komponenten der verarbeiteten Nachricht (212, 214) beinhaltet; und
übermitteln der Komponenten der verarbeiteten Nachricht (212, 214) an die mehreren Ausführungs-*Threads* (114, 116) wie durch die Thread-Kennung (208) ausgewiesen;
auslösen eines Aufweck-Befehls (*wake command*) bei jedem *Thread,* an den eine Komponente der verarbeiteten Nachricht (212, 214) übermittelt worden ist; und
selektiv übermitteln (408) der Komponenten der verarbeiteten Nachricht (212, 214) an ausgewählte *Threads* innerhalb der Vielzahl an Ausführungs-Threads (114, 116) der Anwendung (110), entsprechend welche der *Thread*-begründeten Quellennachrichten-Komponenten (148, 150) die Komponenten der verarbeiteten Nachricht (212, 214) hervorrufen.

8. Der Herstellungsartikel (100) nach Anspruch 7, wobei die Verschlüsselungs-Überwachungslogik (154) zu Folgendem betriebsbereit ist:
übermitteln der zusammengesetzten Nachricht (142) durch Schreiben der zusammengesetzten Nachricht (142) in einen Texturspeicher (136) der GPU (106).

9. Der Herstellungsartikel (100) nach Anspruch 7 oder 8, wobei die Verschlüsselungs-Überwachungslogik (154) des Weiteren zu Folgendem betriebsbereit ist:
konstruieren von Abschnitten der zusammengesetzten Nachricht (162, 164, 166) durch Hinzufügen einer *Thread-*Kennung (208) und einer Nachrichten-Länge zu jeder Quellennachrichten-Komponente (148, 150); und vorzugsweise stapeln der Quellennachrichten-Komponenten (148, 150) durch Hinzufügen von jedem Abschnitt der zusammengesetzten Nachricht (162, 164, 166) in die zusammengesetzte Nachricht (142).

10. Der Herstellungsartikel (100) nach irgendeinem der Ansprüche von 7 bis 9, wobei die Verschlüsselungs-Überwachungslogik (154) des Weiteren zu Folgendem betriebsbereit ist:
stapeln der Quellennachrichten-Komponenten (148, 150) in die zusammengesetzte Nachricht (142), bis eine maximale Größe der zusammengesetzten Nachricht erreicht wird, und dann übermitteln der zusammengesetzten Nachricht (142) an die GPU (106).

11. Der Herstellungsartikel (100) nach irgendeinem der Ansprüche von 7 bis 10, wobei die Verschlüsselungs-Überwachungslogik (154) auf einen API-Aufruf-Wrapper (152) ansprechend ist, der Funktionsaufrufe der mehreren Ausführungs-Threads (114, 116) zur Nachrichten-Verschlüsselung abfängt und die Funktionsaufrufe zur Nachrichten-Verschlüsselung an die Verschlüsselungs-Überwachungslogik (154) weitersendet.

## Revendications

1. Une machine (100) pour la commande de supervision d'opérations de cryptage et de décryptage dans un environnement multifilière, la machine (100) comprenant :
une unité centrale de traitement (CPU 102) ;
une unité de traitement graphique (GPU 106) comprenant une mémoire de texture (146) et une pluralité d'unités de traitement qui exécutent un algorithme de cryptage (144) ; et
une mémoire (104) couplée à la CPU (102), la mémoire (104) comprenant :
une application (110) comprenant une pluralité de fils d'exécution (114, 116) ;
des composantes de message de source (148, 150) générées par la pluralité de fils d'exécution (114, 116) de l'application (110) ; et
une logique de surveillance de cryptage (154) conçue pour :
- obtenir les composantes de message de source (148, 150) de la pluralité de fils d'exécution (114, 116) requérant un cryptage et un décryptage ;
- grouper les composantes de message de source (148, 150) de différent fils de la pluralité de fils d'exécution (114, 116) dans un message composite (142) jusqu'à ce que un temporisateur de groupage expire, sachant que le fait de grouper les composantes de message de source (148, 116) dans le message composite (142) comporte le fait de :
-- créer, pour chacune des composantes de message de source (148, 150) obtenues, une section de message composite, la section de message composite incluant un identificateur de fil (208) du respectif fil d'exécution (114, 116), une longueur de message pour la composante de message de source (148, 150), et la composante de message de source respectivement ; et
-- grouper la section de message composite créée dans la section de message composite ;
- après la réception de chaque composante de message de source (148, 150), mettre chaque fil (114, 116) au repos en appelant une fonction du système d'exploitation pour mettre un fil (114, 116) au repos selon un identificateur de fil (208) spécifié par la logique de surveillance de cryptage (154) ; et
- communiquer le message composite (142) au GPU (106) pour un traitement par l'algorithme de cryptage (144), sachant qu'un traitement par l'algorithme de cryptage (144) comprend le fait de :
-- séparer les sections de message composite dans le message composite ;
-- traiter chaque composante de message de source (148, 116) de chaque section de message composite, sachant que le fait de traiter une composante de message de source comporte le cryptage ou le décryptage de la composante de message de source ;
-- générer, pour chaque composante de message de source traitée, une composante de message traitée (212, 214) comprenant l'identificateur de fil (208) de la respective composante de message de source (148, 116) ; et
-- générer un message traité (202) comprenant toutes les composantes de message traitées (212, 214) générées ;
- recevoir (402) le message traité (202) du GPU (106) ;
- désassembler (404) le message traité (202) en sections de message traité (204, 206, 208) incluant les identificateurs de fil (208) et les composantes de message traitées (212, 214) ; et
communiquer les composantes de message traitées (212, 214) à la pluralité de fils d'exécution (114, 116) comme indiqué par les identificateurs de fil (208) ;
- initier une instruction d'éveil pour chaque fil auquel une composante de message traitée (212, 214) à été communiqué ; et
- communiquer sélectivement (408) les composantes de message traitées (212, 214) à des fils sélectionnés parmi la pluralité de fils d'exécution (114,116) de l'application (110), selon lesquelles des composantes de message de source (148, 150), provenant des fils, donnent lieu aux composantes de message traitées (212, 214).

2. La machine (100) d'après la revendication 1, sachant que la logique de surveillance de cryptage (154) est conçue pour :
communiquer le message composite (142) en écrivant le message composite (142) dans la mémoire de texture (146) du GPU (106).

3. La machine (100) d'après une des revendications précédentes, sachant que la logique de surveillance de cryptage (154) est en outre conçue pour :
grouper les composantes de message de source (148, 150) dans le message composite (142) jusqu'à l'atteinte d'une taille maximale de message composite et ensuite communiquer le message composite (142) au GPU (106).

4. La machine (100) d'après une des revendications précédentes, sachant que la logique de surveillance de cryptage (154) est en outre conçue pour grouper des composantes de message de source (148, 150) dans le message composite (142) de manière que le message composite ne contienne pas plus d'un nombre maximal de sections de message composite, le nombre maximal de sections de message composite étant déterminé en se basant sur la capacité de traitement maximale du GPU.

5. La machine (100) d'après une des revendications précédentes, sachant que la mémoire (104) comprend en outre :
un enveloppeur d'appels d'API (152) qui intercepte des appels de fonctions de cryptage de message par la pluralité de fils d'exécution (114, 116) et réachemine les appels de fonctions de cryptage de message vers la logique de surveillance de cryptage (154).

6. La machine (100) d'après une des revendications précédentes, sachant que la logique de surveillance de cryptage (154) est conçue pour recevoir le message traité (202) en lisant le message traité (202) de la mémoire de texture (146) à écriture unique du GPU (106).

7. Un article de fabrication (100), comprenant :
une mémoire (104) lisible par ordinateur ; et
une logique de surveillance de cryptage (154) stockée dans la mémoire (104) et conçue pour :
obtenir des composantes de message de source (148, 150) de la pluralité de fils d'exécution (114, 116) d'une application (110), requérant un cryptage et un décryptage ;
grouper les composantes de message de source (148, 150) provenant de différent fils de la pluralité de fils d'exécution (114, 116) dans un message composite (142) jusqu'à ce que un temporisateur de groupage expire, sachant que le fait de grouper les composantes de message de source (148, 116) dans le message composite (142) comporte le fait de :
-- créer, pour chacune des composantes de message de source (148, 150) obtenues, une section de message composite, la section de message composite incluant un identificateur de fil (208) du respectif fil d'exécution (114, 116), une longueur de message pour la composante de message de source (148, 150), et la composante de message de source respectivement ; et
-- grouper la section de message composite créée dans la section de message composite ;
après la réception de chaque composante de message de source (148, 150), mettre chaque fil (114, 116) au repos en appelant une fonction du système d'exploitation pour mettre un fil (114, 116) au repos selon un identificateur de fil (208) spécifié par la logique de surveillance de cryptage (154) ; et
communiquer le message composite (142) à une unité de traitement graphique (GPU 106) pour un traitement par un algorithme de cryptage (144) s'exécutant sur le GPU (106), sachant qu'un traitement par l'algorithme de cryptage (144) comprend le fait de :
- séparer les sections de message composite dans le message composite ;
- traiter chaque composante de message de source (148, 116) de chaque section de message composite, sachant que le fait de traiter une composante de message de source comporte le cryptage ou le décryptage de la composante de message de source ;
- générer, pour chaque composante de message de source traitée, une composante de message traitée (212, 214) comprenant l'identificateur de fil (208) de la respective composante de message de source (148, 116) ; et
- générer un message traité (202) comprenant toutes les composantes de message traitées (212, 214) générées ;
recevoir (402) le message traité (202) du GPU (106) ;
désassembler (404) le message traité (202) en sections de message traité (204, 206, 208) incluant les identificateurs de fil (208) et les composantes de message traitées (212, 214) ; et
communiquer les composantes de message traitées (212, 214) à la pluralité de fils d'exécution (114, 116) comme indiqué par les identificateurs de fil (208) ;
initier une instruction d'éveil pour chaque fil auquel une composante de message traitée (212, 214) à été communiqué ; et
communiquer sélectivement (408) les composantes de message traitées (212, 214) à des fils sélectionnés parmi la pluralité de fils d'exécution (114, 116) de l'application (110), selon lesquelles des composantes de message de source (148, 150), provenant des fils, donnent lieu aux composantes de message traitées (212, 214).

8. L'article de fabrication (100) d'après la revendication 7, sachant que la logique de surveillance de cryptage (154) est conçue pour :
communiquer le message composite (142) en écrivant le message composite (142) dans la mémoire de texture (136) du GPU (106).

9. L'article de fabrication (100) d'après la revendication 7 ou 8, sachant que la logique de surveillance de cryptage (154) est en outre conçue pour :
construire des sections de message composite (162, 164, 166) en ajoutant un identificateur de fil (208) et une longueur de message à chaque composante de message de source (148, 150) ; et préférablement pour grouper les composantes de message de source (148, 150) en ajoutant chacune des sections de message composite (162, 164, 166) au message composite (142).

10. L'article de fabrication (100) d'après une des revendications de 7 à 9, sachant que la logique de surveillance de cryptage (154) est en outre conçue pour :
grouper les composantes de message de source (148, 150) dans le message composite (142) jusqu'à l'atteinte d'une taille maximale de message composite et
ensuite communiquer le message composite (142) au GPU (106).

11. L'article de fabrication (100) d'après une des revendications de 7 à 10, sachant que la logique de surveillance de cryptage (154) répond à un enveloppeur d'appels d'API (152) qui intercepte des appels de fonctions de cryptage de message par la pluralité de fils d'exécution (114, 116) et réachemine les appels de fonctions de cryptage de message vers la logique de surveillance de cryptage (154).
